(19) Europäisches Patentamt / European Patent Office / Office européen des brevets

(11) **EP 4 130 849 B1**

(12) **EUROPEAN PATENT SPECIFICATION**

(45) Date of publication and mention
of the grant of the patent:
**18.02.2026  Bulletin 2026/08**

(21) Application number: **20928590.7**

(22) Date of filing: **16.12.2020**

(51) International Patent Classification (IPC):
*G02B 27/01* (2006.01)      *G02B 5/30* (2006.01)
*G02B 27/28* (2006.01)      *G02B 25/00* (2006.01)
*G02B 17/08* (2006.01)

(52) Cooperative Patent Classification (CPC):
**G02B 17/0856; G02B 5/3083; G02B 25/001;
G02B 27/0172; G02B 27/286**

(86) International application number:
**PCT/CN2020/136979**

(87) International publication number:
**WO 2021/196746 (07.10.2021 Gazette 2021/40)**

(54) **OPTICAL SYSTEM, ASSEMBLY METHOD, AND VIRTUAL REALITY DEVICE**

OPTISCHES SYSTEM, MONTAGEVERFAHREN UND VORRICHTUNG FÜR VIRTUELLE REALITÄT

SYSTÈME OPTIQUE, PROCÉDÉ D'ASSEMBLAGE ET DISPOSITIF DE RÉALITÉ VIRTUELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2020  CN 202010248596**

(43) Date of publication of application:
**08.02.2023  Bulletin 2023/06**

(73) Proprietor: **Goertek Optical Technology Co., Ltd.
Shandong Province (CN)**

(72) Inventor: **SUN, Qi
Weifang, Shandong 261031 (CN)**

(74) Representative: **ABG Intellectual Property Law,
S.L.
Avenida de Burgos, 16D
Edificio Euromor
28036 Madrid (ES)**

(56) References cited:
| | |
|---|---|
| CN-A- 107 748 436 | CN-A- 107 748 436 |
| CN-A- 110 320 668 | CN-A- 110 646 909 |
| CN-A- 110 764 266 | CN-A- 111 413 799 |
| CN-U- 205 485 019 | CN-U- 205 562 977 |
| US-A- 5 644 436 | US-A1- 2018 164 590 |
| US-A1- 2019 384 045 | US-A1- 2020 073 123 |

## Description

### Technical Field

The present disclosure relates to the technical field of optical imaging, in particular to an optical system, an assembling method and a virtual reality device.

### Background Art

With the development of virtual reality technology, the forms and types of virtual reality devices have become increasingly diverse, and the disclosure fields are becoming more and more extensive. Generally, conventional virtual reality devices transmit the output image to the user's eye after a display screen in the device is transmitted and magnified through an optical system, thus the user's eye receives the virtual image of the display screen after being magnified, so that large-screen viewing can be realized through the virtual reality device. When assembling the optical lenses in the virtual reality device, in order to ensure that the optical axes between different lenses are on the same straight line, it is generally to adjust the positions of multiple lenses for several times to meet the imaging requirements of the virtual reality device. However, in the process of assembling multiple lenses, adjusting the lens positions for many times may cause foreign materials to fall onto a light incident surface or a light exit surface of the lens, thereby affecting the imaging of the optical system, and increasing the assembly difficulty of the optical system.

Document US2019384045A1 discloses a folded optical system in which a light beam is bent as it traverses the system. The optical system is configured to display an image to a viewer through an opening, and includes a first lent, a second lens, and a third lens.

Document CN110764266A discloses an optical system which includes a light source, a first lens, a second lens, and a third lens in sequence along a light transmission direction. The first lens is a plano-convex lens, the second lens is a biconcave lens, and the third lens is a plano-convex lens. In addition, a light splitter is disposed between the light source and the first lens.

Document US20180164590A1 discloses a short-range optical amplification module which includes a reflective polarizing plate, a first phase delay plate, a second lens and a second phase delay plate that are arranged sequentially, as well as a first lens on either side of any one of the reflective polarizing plate, the first phase delay plate, the second lens and the second phase delay plate .

Document CN205562977U discloses a short distance optical amplifier including a reflective polarizer, a first phase retardation plate, a third lens, and a second phase retardation plate. In addition, a first lens and a second lens is further positioned on either side of the reflective polarizer, the first phase retardation plate, the third lens and the second phase retardation plate.

Document US5644436A1 discloses a concentric optical system which includes a first optical component and a second optical component having at least two semitransparent reflecting surfaces, each having a concave surface directed toward a pupil plane. The semitransparent reflecting surfaces are disposed such that each semitransparent reflecting surface transmits light rays at least once and reflects them at least once.

### Summary

The invention is defined in the appended claims.

The present disclosure provides an optical system, an assembling method and a virtual reality device, aiming at solving the problem in the art that when assembling lenses in an optical system, foreign materials easily falls onto a light incident surface or a light exit surface of the lens, which affects imaging of the optical system and increases the assembly difficulty of the optical system.

In order to achieve the above object, the present disclosure provides an optical system, the optical system including a display unit, a first lens and a second lens in sequence along a light transmission direction.

The first lens includes a first surface protruding towards the display unit and a second surface protruding towards the second lens.

The second lens comprises a third surface recessed towards the first lens and a fourth surface away from the first lens.

The optical system further includes a first phase retarder and a reflective polarizer, the first phase retarder is disposed on a side of the second lens away from the display unit, or on a side of the second lens close to the display unit, and the reflective polarizer is disposed on a side of the first phase retarder away from the display unit; a radius of curvature of the second surface is greater than a radius of curvature of the third surface.

An optical splitter is disposed on a side of the first lens close to the display unit.

The first surface, each of the second surface and the third surface is an aspherical surface.

An edge portion of the first lens and an edge portion of the second lens are adhered and combined to each other.

There is a gap between the first lens and the second lens.

Optionally, the optical system satisfies the following relationships: 150 < abs(R3) < 400; and abs(Conic3) < 5, wherein R3 is the radius of curvature of the third surface, abs(R3) is an absolute value of R3, and wherein Conic3 is a conic coefficient of the third surface, and abs(Conic3) is an absolute value of Conic3.

Optionally, the optical system satisfies the following relationships: 300 < abs(R2) < 550; and abs(Conic2) < 5, wherein R2 is the radius of curvature of the second surface, abs(R2) is an absolute value of R2, and wherein Conic2 is a conic coefficient of the second surface, and abs(Conic2) is an absolute value of Conic2.

Optionally, the optical system satisfies the following relationships: 40 < abs(R1) < 70; and abs(Conic1) < 5, wherein R1 is a radius of curvature of the first surface, abs(R1) is an absolute value of R1, and wherein Conic1 is a conic coefficient of the first surface, and abs(Conic1) is an absolute value of Conic 1.

Optionally, the optical system satisfies the following relationships: $4 < T1 \leq 5$; and $3 < T2 < 4$, wherein the T1 is a central thickness of the first lens, the T2 is a central thickness of the second lens.

Optionally, the optical system satisfies the following relationships: 5 < L1 < 10; 0.1 < L2 < 0.5; and 0.02 < ED < 0.1, wherein L1 is a distance from the display unit to the first surface in an optical axis direction, L2 is a distance between the second surface and the third surface in the optical axis direction, and ED is a distance between an edge portion of the first lens away from the optical axis and an edge portion of the second lens away from the optical axis.

Optionally, the optical system satisfies the following relationships: 15*f < abs(f2) < 20f; and 4*f < f1 < 6*f, wherein f is a focal length of the optical system, f1 is a focal length of the first lens, f2 is a focal length of the second lens, and abs(f2) is an absolute value of f2.

Optionally, the second surface is provided with an anti-reflection film layer, and a wavelength of the light emitted by the display unit is included in a range of an anti-reflection band of the anti-reflection film layer.

In order to achieve the above object, the present disclosure provides a virtual reality device, wherein the virtual reality device includes the optical system according to any one of the foregoing embodiments.

In order to achieve the above object, the present disclosure provides an assembling method of an optical system, wherein the optical system at least includes a first lens, a second lens and a structural member, wherein the first lens comprises a first surface and a second surface opposite to the first surface and protruding towards the second lens, wherein the second lens comprises a third surface recessed towards the first lens and a fourth surface away from the first lens, the method including: adjusting the first lens to a first preset mounting position and adjusting the second lens to a second preset mounting position, so that an optical axis of the first lens is collinear with an optical axis of the second lens; applying an adhesive on an edge portion of the first lens; adjusting a distance between the first lens and the second lens to control the edge portion of the first lens to be aligned with an edge portion of the second lens; adhering the first lens and the second lens to obtain a lens combination; and mounting the lens combination on the structural member.

A radius of curvature of the second surface is greater than a radius of curvature of the third surface.

There is a gap between the first lens and the second lens.

Optionally, the step of applying the adhesive to the edge portion of the first lens includes: determining a preset area of the first lens, wherein the preset area is circumferentially located on the edge portion of the first lens; and applying the adhesive to the preset area.

Optionally, after the step of adjusting a distance between the first lens and the second lens to control the edge portion of the first lens to be aligned with the edge portion of the second lens, the method further includes: curing the adhesive applied on the edge portion of the first lens.

According to the present disclosure, the optical system includes a display unit, a first lens and a second lens in sequence along a light transmission direction, the first lens includes a first surface protruding towards the display unit and a second surface protruding towards the second lens, the second lens comprises a third surface recessed towards the first lens and a fourth surface away from the first lens, the optical system further includes a first phase retarder and a reflective polarizer, the first phase retarder is disposed on a side of the second lens away from the display unit, or on a side of the second lens close to the display unit, and the reflective polarizer is disposed on a side of the first phase retarder away from the display unit, an optical splitter is disposed on a side of the first lens close to the display unit, and each of the first surface, the second surface and the third surface is an aspherical surface. Since the radius of curvature of the second surface is greater than or equal to the radius of curvature of the third surface, the first lens and the second lens can be adhered and combined to each other along an edge portion of the first lens and an edge portion of the second lens, so as to prevent foreign materials from entering the sealed space between the first lens and the second lens when assembling the first lens and the second lens and thus affecting the optical performance of the optical system. In addition, since the first lens and the second lens are adhered and combined to each other as an integrated structure, it is unnecessary to adjust the relative position between the first lens and the second lens when assembling the first lens and the second lens, thereby solving the problem in the art that when assembling lenses in an optical system, foreign materials easily falls onto a light incident surface or a light exit surface of the lens, which affects imaging of the optical system and increases the assembly difficulty of the optical system.

## Brief Description of the Drawings

In order to explain the technical solutions in the embodiments of the present disclosure or in the prior art more clearly, the following will briefly introduce the accompanying drawings required for the description of the embodiments or the prior art. Obviously, the drawings in the following description are merely some embodiments of the present disclosure, and for those skilled in the art, other drawings can also be obtained according to the provided drawings without any creative effort.

Fig. 1 is a structural schematic diagram of an optical system according to the present disclosure.

Fig. 2 is an optical path schematic diagram of an optical system according to the present disclosure.

Fig. 3 is a spot diagram of the optical system according to a first embodiment of the present disclosure.

Fig. 4 shows a field curvature diagram and a distortion diagram of the optical system according to the first embodiment of the present disclosure.

Fig. 5 is a vertical axis chromatic aberration diagram of the optical system according to the first embodiment of the present disclosure.

Fig. 6 is a flow diagram of an assembling method of the optical system according to an embodiment of the present disclosure.

Fig. 7 is a flow diagram of an assembling method of the optical system according to another embodiment of the present disclosure.

Fig. 8 is a flow diagram of an assembling method of the optical system according to still another embodiment of the present disclosure.

Reference signs:

| Reference signs | Name | Reference signs | Name |
| --- | --- | --- | --- |
| 10 | display unit | 30 | second lens |
| 20 | first lens | 31 | third surface |
| 21 | first surface | 32 | fourth surface |
| 22 | second surface | | |

The realization, functional characteristics and advantages of the present disclosure will be further described with reference to the accompanying drawings in combination with the embodiments.

## Detailed Description of the Embodiments

The technical solutions in the embodiments of the present disclosure will be clearly and completely described below with reference to the drawings in the embodiments of the present disclosure. Obviously, the described embodiments are only part of the embodiments of the present disclosure, rather than all the embodiments. Based on the embodiments in the present disclosure, all other embodiments obtained by persons of ordinary skill in the art without creative efforts shall fall within the protection scope of the present disclosure.

It should be noted that all directional indications (such as up, down, left, right, front, back, etc.) in the embodiments of the present disclosure are only used to explain the relative position relationship, motion, etc. between components in a specific view position (as shown in the figure), and if the specific view position changes, the directional indication will change accordingly.

In addition, descriptions such as "first", "second", etc. in the present disclosure are only for descriptive purposes, and should not be construed as indicating or implying their relative importance or implicitly indicating the number of indicated technical features. Thus, features defined with "first" and "second" may explicitly or implicitly include at least one such feature. In the description of the present disclosure, unless otherwise expressly and specifically defined, "a plurality of" means at least two, such as two, three, etc.

In the present disclosure, unless otherwise expressly specified and limited, the terms "connected", "fixed", etc. should be understood in a broad sense. For example, "fixed" may refer to a fixed connection, a detachable connection, or may be integrated; may refer to a mechanical connection or an electrical connection; may be directly connected or indirectly connected through an intermediate medium; and it can be an internal communication between two elements or an interaction relationship between two elements, unless otherwise specified. For those of ordinary skill in the art, the specific meanings of the above terms in the present disclosure can be understood according to specific situations.

In addition, the technical solutions of various embodiments of the present disclosure can be combined with each other, but the combination must be based on the realization by those of ordinary skill in the art. When the combination of technical solutions is contradictory or impossible, it should be considered that the combination of such technical solutions does not exist, nor is it within the scope of protection claimed by the present disclosure.

The present disclosure provides an optical system, an assembling method and a virtual reality device.

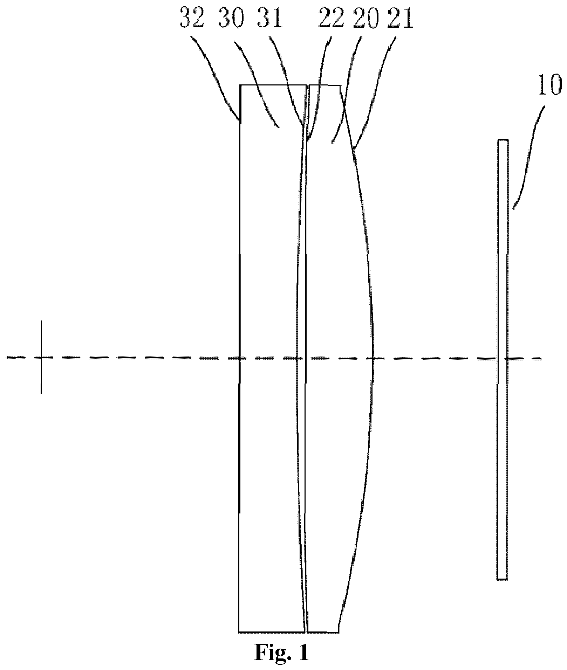

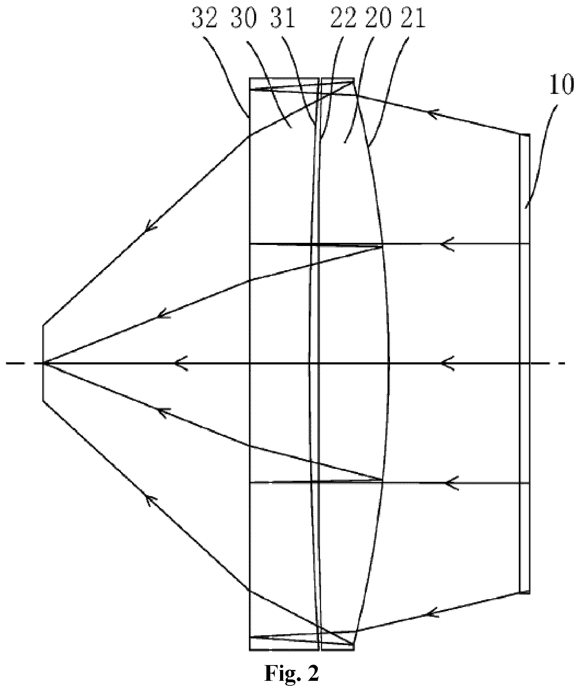

Referring to Figs. 1 and 2, the optical system includes a display unit 10, a first lens 20 and a second lens 30 in sequence along a light transmission direction.

The first lens 20 includes a first surface 21 protruding towards the display unit 10 and a second surface 22 protruding towards the second lens 30.

The second lens 30 comprises a third surface 31 recessed towards the first lens 20 and a fourth surface 32 away from the first lens 20.

The optical system further includes a first phase retarder and a reflective polarizer, the first phase retarder is disposed on a side of the second lens 20 away from the display unit 10, or on a side of the second lens close to the display unit 10, the reflective polarizer is disposed on a side of the first phase retarder away from the display unit 10.

The radius of curvature of the second surface22 is greater than the radius of curvature of the third surface 31.

An optical splitter is disposed on a side of the first lens 20 close to the display unit 10.

Each of the first surface 21, the second surface 22 and the third surface 31 is an aspherical surface. In a specific embodiment, compared with a spherical surface, the aspherical surface can effectively reduce the spherical aberration and distortion of the optical system, thereby reducing the number of lenses in the optical system and reducing the size of the lenses.

In a preferred embodiment, the optical splitter may be an optical splitter film or an optical splitter member. When the optical splitter is an optical splitter film, the optical splitter film may be provided on the first surface 21 by applying or attaching. Similarly, the reflective polarizer may be provided on the first surface 21 by applying or attaching. Furthermore, the optical splitter film may be a transflective film, and the ratio of transmission to reflection of the transflective film is 1:1. It will be understood that the splitting ratio of the optical splitter film is not limited thereto, and in other embodiments, for example, the ratio of the transmission to reflection may be 4:6 or 3:7.

In the technical solution of the present disclosure, the optical system includes a display unit 10, a first lens 20 and a second lens 30 in sequence along a light transmission direction. The first lens 20 includes a first surface 21 protruding towards the display unit 10 and a second surface 22 protruding towards the second lens 30. The second lens 30 comprises a third surface 31 recessed towards the first lens 20 and a fourth surface 32 away from the first lens 20. A side of the second surface 22 that is close to the fourth surface 32 is provided with a first phase retarder and a reflective polarizer. A side of the first lens 20 that is close to the display unit 10 is provided with an optical splitter. Each of the first surface 21, the second surface 22 and the third surface 31 is an aspherical surface.

A first light emitted by the display unit 10 passes through the optical splitter, the first lens 20, the second lens 30 and the first phase retarder in sequence, and the first light is converted into a first linearly polarized light. Since the polarization direction of the first linearly polarized light is the same as the reflection direction of the reflective polarizer, the first linearly polarized light is reflected by the reflective polarizer, and then passes through the first phase retarder, and the first linearly polarized light is converted into a first circularly polarized light by the first phase retarder. The first circularly polarized light passes through the first lens 20 and then is reflected by the optical splitter, and the first circularly polarized light is converted into a second circularly polarized light, and the rotation direction of the second circularly polarized light is reverse to that of the first circularly polarized light. The second circularly polarized light passes through the first lens 20 and the second lens 30, and then passes through the first phase retarder again, and the second circularly polarized light is converted into a second linearly polarized light. Since the polarization direction of the second linearly polarized light is the same as the transmission direction of the reflective polarizer, the second linearly polarized light passes through the reflective polarizer and then passes through the second lens 30 and is transmitted to the user's eye.

Since the radius of curvature of the second surface 22 is greater than the radius of curvature of the third surface 31, the first lens 20 and the second lens 30 can be adhered and combined to each other along an edge portion of the first lens and an edge portion of the second lens, so as to prevent foreign materials from entering the optical system through the gap between the first lens 20 and the second lens 30 when assembling the first lens 20 and the second lens 30 and thus affecting the optical performance of the optical system. In addition, since the first lens 20 and the second lens 30 are adhered and combined to each other as an integrated structure, it is unnecessary to adjust the relative position between the first lens 20 and the second lens 30 when assembling the first lens 20 and the second lens 30, accordingly, the first lens 20 and the second lens 30 are assembled, the assembly accuracy of the optical system is improved, and solves the problem that foreign materials easily falls onto a light incident surface or a light exit surface of the lens, which affects imaging of the optical system and increases the assembly difficulty of the optical system.

In an optional embodiment, the optical system further includes a second phase retarder, the second phase retarder is provided between the display unit 10 and the optical splitter. Specifically, when the light emitted by the display unit 10 is a linearly polarized light, in order to ensure that the light can be reflected in the optical system, the second phase retarder is disposed between the display unit 10 and the first lens 20, so that the linearly polarized light emitted by the display unit 10 is converted into a circularly polarized light by passing through the second phase retarder, and the light can be converted into the first linearly polarized light by passing through the first phase retarder and be reflected by the reflective polarizer.

In an optional embodiment, the optical system satisfies the following relationships: 150 < abs(R3) < 400; and abs(Conic3) < 5, wherein R3 is the radius of curvature of the third surface 31, abs(R3) is an absolute value of R3.

Conic3 is a conic coefficient of the third surface 31, abs(Conic3) is an absolute value of Conic3. Specifically, the radius of curvature represents the degree of curvature of the curved surface, the conic coefficient represents a second order coefficient of the curved surface function of an aspherical surface. In a specific embodiment, the shape of the aspherical surface is represented by the radius of curvature and the conic coefficient.

In an optional embodiment, the optical system satisfies the following relationships: 300 < abs(R2) < 550; and abs(Conic2) < 5, wherein R2 is the radius of curvature of the second surface 22, abs(R2) is an absolute value of R2, and wherein Conic2 is a conic coefficient of the second surface 22, and abs(Conic2) is an absolute value of Conic2.

In an optional embodiment, the optical system satisfies the following relationships: 40 < abs(R1) < 70; and abs(Conic1) < 5, wherein R1 is a radius of curvature of the first surface 21, abs(R1) is an absolute value of R1, Conic1 is a conic coefficient of the first surface 21, and abs(Conic1) is an absolute value of Conic1.

In an optional embodiment, the optical system satisfies the following relationships: $4 < T1 \leq 5$; and 3 < T2 < 4, wherein the T1 is a central thickness of the first lens 20, the T2 is a central thickness of the second lens 30.

In an optional embodiment, the optical system satisfies the following relationships: 5 < L1 < 10; 0.1 < L2 < 0.5; and 0.02 < ED < 0.1, wherein L1 is a distance from the display unit 10 to the first surface 21 in an optical axis direction, L2 is a distance between the second surface 22 and the third surface 31 in the optical axis direction, and ED is a distance between an edge portion of the first lens 20 away from the optical axis and an edge portion of the second lens 30 away from the optical axis.

In an optional embodiment, the optical system satisfies the following relationships: 15*f < abs(f2) < 20f; and 4*f < f1 < 6*f, wherein f is a focal length of the optical system, f1 is a focal length of the first lens 20, f2 is a focal length of the second lens 30.

In an optional embodiment, the first phase retarder is a 1/4 wave plate, and specifically, the center wavelength of the 1/4 wave plate is the same as the wavelength of the incident light.

In an optional embodiment, the second surface 22 is provided with an anti-reflection film layer, and a wavelength range of the light emitted by the display unit 10 is included in the wavelength band where the anti-reflection film layer performs an anti-reflecting function (i.e., anti-reflection band). Specifically, the anti-reflection film layer is used to reduce the reflection of light on the second surface 22. The anti-reflection film layer may be formed on the second surface 22 by evaporation deposition or adhesion.

First Embodiment

In the first embodiment, the design data of the optical system are shown in Table 1.

Table 1

| **Device** | Surface | Surface type | Radius of curvature | Thickn ess | Apert ure | Conic coeffici ent | A2 | A4 |
|---|---|---|---|---|---|---|---|---|
| entrance pupil | | Spherical surface | Infinite | -1500 | 2517. 299 | 0 | \ | |
| object surface | | Spherical surface | Infinite | 12 | 4 | 0 | \ | |
| Second lens 30 | Fourth surface s 32 | Spherical surface | Infinite | 3.5002 45 | 24.10 639 | 0 | \ | |
| | Third surface s 31 | Aspheric surface | 179.3324 | 0.41158 82 | 27.78 996 | 3.6175 26 | \ | -5.09E-07 |

(continued)

| Device | Surface | Surface type | Radius of curvature | Thickn ess | Apert ure | Conic coeffici ent | A2 | A4 |
|---|---|---|---|---|---|---|---|---|
| First lens 20 | Second surface s 22 | Aspheric surface | 496.203 | 4.2002 25 | 27.98 556 | 1.0296 25 | \ | 4.22E-07 |
| | First surface s 21 | Aspheric surface | 56.74651 | 4.2002 25 | 29.92 905 | 0.3944 46 | \ | 4.64E-07 |
| Display unit 10 | | Spherical surface | Infinite | 0.5 | 24.42 873 | 0 | \ | |
| | | Spherical surface | Infinite | 0.1419 735 | 24.28 637 | 0 | \ | |
| | | Spherical surface | Infinite | | 24.27 87 | 0 | \ | |

In Table 1, A2 and A4 represent the even-order conic coefficients of the aspheric surface.

In the first embodiment, the parameters are as follows:

the focal length f of the optical system is 18.35 mm;
the focal length f1 of the first lens 20 is 93.3 mm;
the focal length f2 of the second lens 30 is -327.6 mm;
the radius of curvature R1 of the first surface 21 is -56.746 mm;
the radius of curvature R2 of the second surface 22 is 496.203 mm;
the radius of curvature R3 of the third surface 31 is 179.3324 mm;
the thickness T1 of the first lens 20 is 4.2002 mm;
the thickness T2 of the second lens 30 is 3.5002 mm;
the conic coefficient Conic1 of the first surface 21 is -0.394446;
the conic coefficient Conic2 of the second surface 22 is 1.029625; and
the conic coefficient Conic3 of the fourth surface 32 is 3.617526,
wherein the first surface 21, the second surface 22 and the third surface 31 may be even-order aspherical surfaces, and wherein the even-order aspheric surface satisfies the following relationship:

$$Z = \frac{CY^2}{1 + \sqrt{1 - (1+K)C^2Y^2}} + \sum_{i=2}^{N} \alpha_i Y^{2i}$$

wherein Y is the height of the center of the surface of the lens, Z is the distance of the aspherical surface from the optical axis with the surface vertex as the reference point of along the direction of the optical axis (Y axis), C is the radius of curvature of the vertex of the aspheric surface, K is the conic coefficient, and $\alpha_i$ represents the i-th order aspheric coefficient.

In another embodiment, the first surface 21, the second surface 22 and the third surface 31 may be odd-order aspherical surfaces, and wherein the odd-order aspheric surface satisfies the following relationship:

$$Z = \frac{CY^2}{1 + \sqrt{1 - (1+K)C^2Y^2}} + \sum_{i=2}^{N} \beta_i Y^{i}$$

wherein Y is the height of the center of the surface of the lens, Z is the distance of the aspherical surface from the optical axis with the surface vertex as the reference point along the direction of the optical axis (Y axis), C is the radius of curvature of the vertex of the aspheric surface, K is the conic coefficient, and $\beta_i$ represents the i-th order aspheric coefficient.

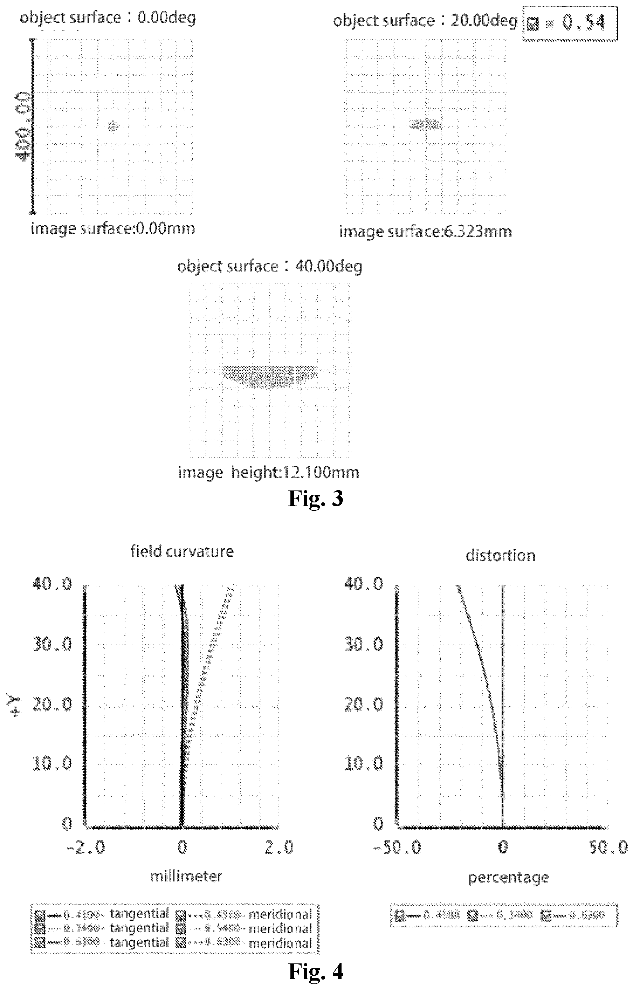

Referring to Fig. 3, which is a spot diagram of the first embodiment. The spot diagram refers to a dispersion pattern scattered in a certain range formed by many light rays emitted from a point passing through the optical system because the intersections with the image plane are no longer concentrated at the same point due to aberrations, which is used to indicate the imaging quality of the projection optical system. In the first embodiment, the maximum value of the image point in the spot diagram corresponds to the maximum field of view, and the maximum value of the image point in the spot diagram is less than 60 μm.

Referring to Fig. 4, which is a field curvature diagram and an optical distortion diagram of the first embodiment. The field curvature is used to represent the position change of the beam image points of different field of view points away from the image plane, and the optical distortion refers to the vertical axis distance between the intersection of the chief ray at the dominant wavelength of a certain field of view and the image plane from the ideal image point. In the first embodiment, the field curvatures on the tangent plane and the sagittal plane are both less than ±1.2 mm, and the maximum distortion is at the maximum field of view, the maximum distortion is less than 21.5%.

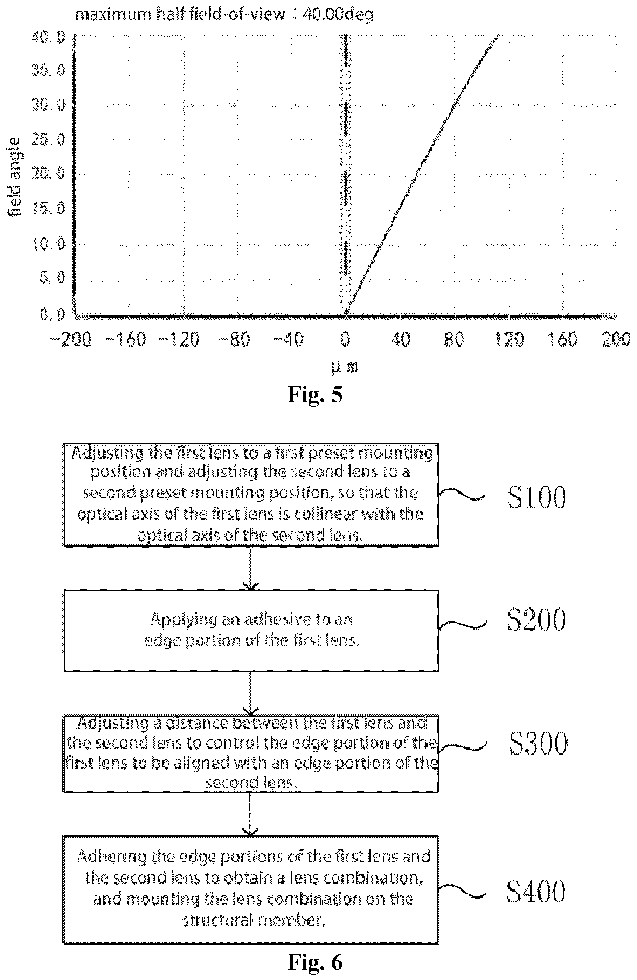

Referring to Fig. 5, which is a vertical axis chromatic aberration diagram of the first embodiment. The vertical axis chromatic aberration, also called magnification chromatic aberration, mainly refers to the difference between the focus positions of hydrogen blue light and hydrogen red light on the image plane when a polychromatic chief ray on the object side becomes a plurality of rays when exiting from the image side due to the dispersion of the refraction system. In the first embodiment, the maximum dispersion of the optical system is at the maximum position of the field of view of the optical system, and the maximum chromatic aberration value of the optical system is less than 111.96 μm, which can meet the needs of users with a software post-correction.

In the first embodiment, the length from the display unit 10 to the fourth surface 32 of the second lens 30 is 16.4 mm, the maximum field of view is 80 degrees, and the spot size of the maximum field of view of the optical system is less than 60 μm, so as to ensure clear imaging. On the premise of satisfying the user's viewing experience, the volume of the optical system is reduced by folding the optical path, thereby reducing the volume and weight of the virtual reality device and improving the user experience.

The present disclosure also provides a virtual reality device, the virtual reality device includes the optical system described in any of the above-mentioned embodiments, and the specific structure of the optical system refers to the above-mentioned embodiments. Since the optical system adopts all the technical solutions in the above-mentioned embodiments, it at least has all the beneficial effects brought by the technical solutions of the above embodiments, which will not be repeated here.

Referring to Fig. 6, in order to achieve the above object, the present disclosure provides an assembling method of an optical system, wherein the optical system at least includes a first lens 20, a second lens 30 and a structural member, the method may include the following steps.

S100: Adjusting the first lens 20 to a first preset mounting position and adjusting the second lens 30 to a second preset mounting position, so that the optical axis of the first lens 20 is collinear with the optical axis of the second lens 30.

Here, the first preset mounting position is the preset location of the first lens 20 when the lens 20 is assembled with the second lens 30, and the second preset mounting position is the preset location of the second lens 30 when the lens 20 is assembled with the second lens 30.

When placing the first lens 20 in the first preset mounting position, the first lens 20 may be placed horizontally or vertically. It will be understood that in order to facilitate the assembly of the first lens 20 and the second lens 30, when the first lens 20 is placed in the first preset mounting position and the second lens 30 is placed in the second preset mounting position, the optical axis of the first lens 20 is collinear with the optical axis of the second lens 30.

S200: Applying an adhesive to an edge portion of the first lens 20.

S300: Adjusting a distance between the first lens 20 and the second lens 30 to control the edge portion of the first lens 20 to be aligned with an edge portion of the second lens 30.

Here, since the optical system is a folded optical path system, during the applying process, in order to avoid the influence of the adhesive to the light incident surface or the light exit surface of the first lens 20, adhesive is applied at the edge portion of the first lens 20, so that the first lens 20 and the second lens 30 are adhered and combined to each other along the edge portion.

After applying adhesive on the edge portion of the first lens 20, move the second lens 30 toward the first lens 20, or move the first lens 20 toward the second lens 30, so that the adhesive can bond the edge portion of the first lens 20 and the edge portion of the second lens 30 uniformly.

S400: Adhering the edge portions of the first lens 20 and the second lens 30 to obtain a lens combination, and mounting the lens combination on the structural member.

After the edge portion of the first lens 20 and the edge portion of the second lens 30 are adhered and combined to each other, the first lens 20 and the second lens 30 form an integrated lens combination, and then the lens combination is mounted on the structural member. Compared with the first lens 20 and the second lens 30 being respectively mounted on the structural member, the lens combination can reduce assembly errors generated when the first lens 20 and the second lens 30 are assembled respectively, thereby improving the assembly accuracy of the optical system.

**EP 4 130 849 B1**

In a specific embodiment, since the refractive index and other optical properties of the adhesive are not exactly the same as those of the first lens 20 and the second lens 30, in order to avoid the interference of adhesive applied on the light entering the first lens 20 and the second lens 30, the adhesive is applied on the edge portion of the first lens 20 and the edge portion of the second lens 30, so that the first lens 20 and the second lens 30 are closely contacted and bonded. Therefore, on the one hand, it helps to improve the assembly accuracy of the optical system, and on the other hand, it avoids the problem that when the first lens 20 and the second lens 30 are respectively assembled, foreign materials fall onto the first lens 20 and the second lens 30, affecting the assembly efficiency of the optical system.

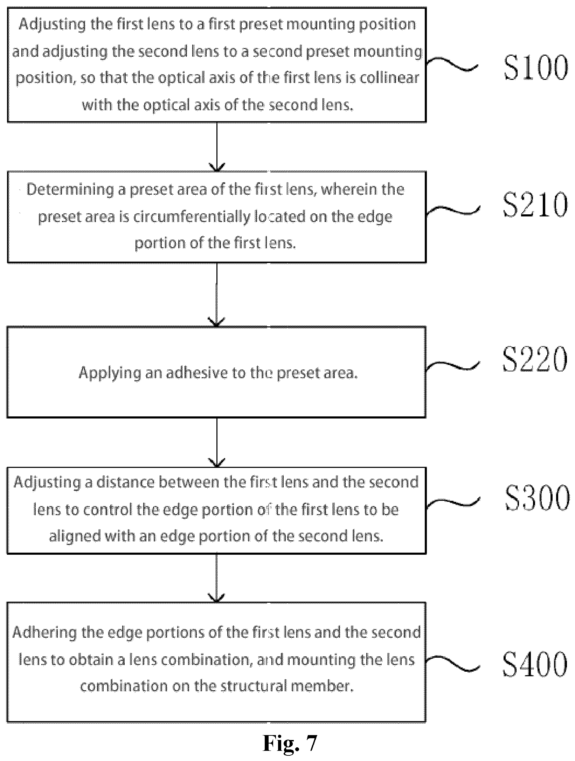

Referring to Fig. 7, in an optional embodiment, at the step S200, the method may include the following steps.

S210: Determining a preset area of the first lens 20, wherein the preset area is circumferentially located on the edge portion of the first lens 20.

S220: Applying an adhesive to the preset area.

Here, the preset area may be a multi-point position or an annular area coated circumferentially located on the edge portion of the first lens 20. In addition, when adhering and connecting the first lens 20 and the second lens 30, in order to prevent haze from occurring in a sealed space between the first lens 20 and the second lens 30 or having other defects after adhering, some air vents may be provided on the edge portions of the first lens 20 and the second lens 30 after the applying adhesive on the preset area, so as to prevent external environment from entering into the sealed space between the first lens 20 and the second lens 30 and reducing the transmission of the system, while avoiding foreign materials entering between the first lens 20 and the second lens 30.

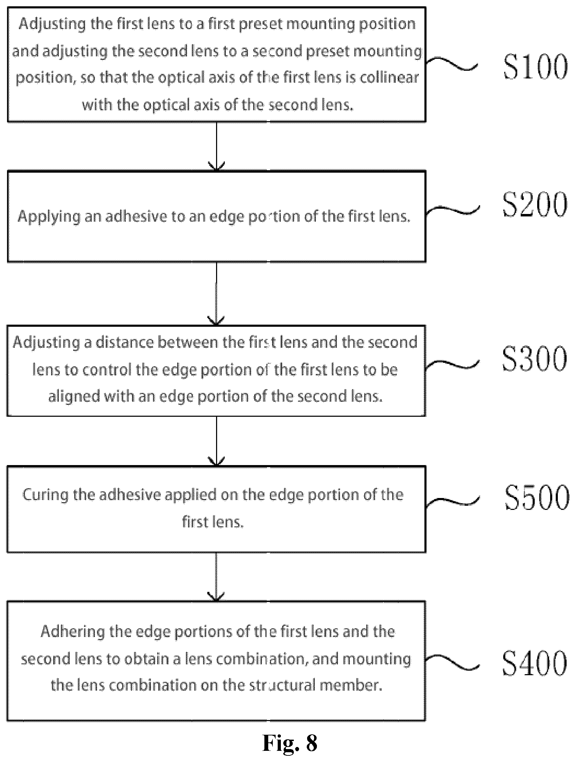

Referring to Fig. 8, in a preferred embodiment, after the step S300, the method may further include the following step.

S500: Curing the adhesive applied on the edge portion of the first lens 20.

Here, after the edge portion of the first lens 20 and the edge portion of the second lens 30 are bonded, in order to reduce the process time, the adhesive applied on the edge portion of the first lens 20 may be cured. Specifically, the adhesive may be an UV curable adhesive. In this case, the curing process of the adhesive can be accelerated by ultraviolet light irradiation. It will be understood that the curing method of the adhesive is not limited thereto, and the process of curing the adhesive applied on the edge portion of the first lens 20 may also be completed by heating or cooling or other methods that can accelerate the curing of the adhesive.

In order to achieve the above object, the present disclosure also provides a computer-readable storage medium, on which an optical system assembly program is stored, when the optical system assembly program is executed by a processor, the steps of the assembling method of the optical system described in any one of the above embodiments are implemented.

In some optional embodiments, the processor may be a central processing unit (CPU) or other general processing units, a digital signal processor (DSP), an application specific integrated circuit (ASIC), a field-programmable gate array (FPGA), or other programmable logic devices, discrete gates or transistor logic devices, discrete hardware components, etc. The general processing unit may be a microprocessor or any conventional processor or the like.

The storage may be an internal storage unit of the device, such as a hard disk or memory of the device. The storage may be an external storage device of the device, such as a plug-in hard disk equipped on the device, or a smart media card (SMC), a secure digital (SD) card, a flash card, etc. Further, the storage may include both an internal storage unit of the device and an external storage device. The storage is used to store the computer program and other programs and data required by the device. The storage may also be used to temporarily store data that has been output or is to be output.

Those skilled in the art can clearly understand that, for the convenience and simplicity of description, only the above-mentioned functional units and modules are illustrated an example, and in practical applications, the above functional allocation can be completed by different functional units and modules as required, that is, the internal structure of the device can be divided into different functional units or modules to complete all or part of the above-described functions. Each functional unit and module in the embodiment may be integrated in one processing unit, or each unit may exist physically independently, or two or more units may be integrated in one unit. And the integrated units can be implemented in the form of hardware or in the form of software functional units. In addition, the specific names of each functional unit and module are only used to distinguish from each other, and are not used to limit the protection scope of the present disclosure. The specific working process of the units and modules in the above-mentioned system may refer to corresponding processes in the foregoing method embodiments, which will not be repeated here.

The above only describes the preferred embodiments of the present disclosure, and is not intended to limit the scope of the present disclosure which is defined by the appended claims.

**Claims**

1.    An optical system, comprising:

a display unit (10), a first lens (20) and a second lens (30) in sequence along a light transmission direction, wherein the first lens (20) comprises a first surface (21) protruding towards the display unit (10) and a second surface (22) protruding towards the second lens (30),

wherein the second lens (30) comprises a third surface (31) recessed towards the first lens (20) and a fourth surface (32) away from the first lens (20),

wherein the optical system further comprises a first phase retarder and a reflective polarizer, the first phase retarder is disposed on a side of the second lens (30) away from the display unit (10), or on a side of the second lens (30) close to the display unit (10), and the reflective polarizer is disposed on a side of the first phase retarder away from the display unit (10),

wherein a radius of curvature of the second surface (22) is greater than a radius of curvature of the third surface (31), and an edge portion of the second surface (22) is combined with an edge portion of the third surface (31), wherein an optical splitter is disposed on a side of the first lens (20) close to the display unit (10),

**characterized in that**

each of the first surface (21), the second surface (22) and the third surface (31) is an aspherical surface, an edge portion of the first lens (20) and an edge portion of the second lens (30) are adhered and combined to each other, and

there is a gap between the first lens (20) and the second lens (30)

2. The optical system of claim 1, wherein the optical system satisfies the following relationships:

$$150 < abs(R3) < 400;$$

and

$$abs(Conic3) < 5,$$

wherein R3 is the radius of curvature of the third surface (31), abs(R3) is an absolute value of R3; and wherein Conic3 is a conic coefficient of the third surface (31), and abs(Conic3) is an absolute value of Conic3.

3. The optical system of claim 1, wherein the optical system satisfies the following relationships:

$$300 < abs(R2) < 550;$$

and

$$abs(Conic2) < 5,$$

wherein R2 is the radius of curvature of the second surface (22), abs(R2) is an absolute value of R2, and wherein Conic2 is a conic coefficient of the second surface (22), and abs(Conic2) is an absolute value of Conic2.

4. The optical system of claim 1, wherein the optical system satisfies the following relationships:

$$40 < abs(R1) < 70;$$

and

$$abs(Conic1) < 5,$$

wherein R1 is a radius of curvature of the first surface (21), abs(R1) is an absolute value of R1, and wherein Conic1 is a conic coefficient of the first surface (21), and abs(Conic1) is an absolute value of Conic1.

5. The optical system of claim 1, wherein the optical system satisfies the following relationships:

$$4 < T1 \leq 5;$$

and

$$3 < T2 < 4,$$

wherein the T1 is a central thickness of the first lens (20), the T2 is a central thickness of the second lens (30).

6. The optical system of claim 1, wherein the optical system satisfies the following relationships:

$$5 < L1 < 10;$$

$$0.1 < L2 < 0.5;$$

and

$$0.02 < ED < 0.1,$$

wherein L1 is a distance from the display unit (10) to the first surface (21) in an optical axis direction, L2 is a distance between the second surface (22) and the third surface (31) in the optical axis direction, and ED is a distance between an edge portion of the first lens (20) away from the optical axis and an edge portion of the second lens (30) away from the optical axis.

7. The optical system of claim 1, wherein the optical system satisfies the following relationships:

$$15*f < abs(f2) < 20f;$$

and

$$4*f < f1 < 6*f,$$

wherein f is a focal length of the optical system, f1 is a focal length of the first lens (20), f2 is a focal length of the second lens (30), and abs(f2) is an absolute value of f2.

8. The optical system of any one of claims 1 to 7, wherein the second surface (22) is provided with an anti-reflection film layer, and a wavelength of the light emitted by the display unit (10) is included in a range of an anti-reflection band of the anti-reflection film layer.

9. A virtual reality device, wherein the virtual reality device comprises the optical system of any one of claims 1 to 8.

10. An assembling method of an optical system according to claim 1, wherein the optical system further comprises a structural member, the method comprising:

adjusting the first lens (20) to a first preset mounting position and adjusting the second lens (30) to a second preset mounting position, so that an optical axis of the first lens (20) is collinear with an optical axis of the second lens (30);
applying an adhesive to an edge portion of the first lens (20);
adjusting a distance between the first lens (20) and the second lens (30) to control the edge portion of the first lens (20) to be aligned with an edge portion of the second lens (30);
adhering the first lens (20) and the second lens (30) to obtain a lens combination; and
mounting the lens combination on the structural member.

11. The assembling method of an optical system of claim 10, wherein the step of applying the adhesive to an edge portion of the first lens (20) comprises:

determining a preset area of the first lens (20), wherein the preset area is circumferentially located on the edge portion of the first lens (20); and

applying the adhesive to the preset area.

12. The assembling method of an optical system of claim 10, wherein the method further comprises, after the step of adjusting a distance between the first lens (20) and the second lens (30) to control the edge portion of the first lens (20) to be aligned with the edge portion of the second lens (30):

curing the adhesive applied on the edge portion of the first lens (20).

**Patentansprüche**

1. Optisches System, das Folgendes umfasst:

eine Anzeigeeinheit (10), eine erste Linse (20) und eine zweite Linse (30), die entlang einer Lichtübertragungsrichtung aufeinander folgen,

wobei die erste Linse (20) eine erste Fläche (21) aufweist, die in Richtung der Anzeigeeinheit (10) vorsteht, und eine zweite Fläche (22), die in Richtung der zweiten Linse (30) vorsteht,

wobei die zweite Linse (30) eine dritte Fläche (31), die zur ersten Linse (20) hin zurückgesetzt ist, und eine vierte Fläche (32), die von der ersten Linse (20) entfernt ist, aufweist,

wobei das optische System ferner einen ersten Phasenverzögerer und einen reflektierenden Polarisator umfasst, wobei der erste Phasenverzögerer auf einer von der Anzeigeeinheit (10) entfernten Seite der zweiten Linse (30) oder auf einer Seite der zweiten Linse (30) nahe der Anzeigeeinheit (10) angeordnet ist und der reflektierende Polarisator auf einer von der Anzeigeeinheit (10) entfernten Seite des ersten Phasenverzögerers angeordnet ist,

wobei ein Krümmungsradius der zweiten Oberfläche (22) größer ist als ein Krümmungsradius der dritten Oberfläche (31), und ein Kantenabschnitt der zweiten Oberfläche (22) mit einem Kantenabschnitt der dritten Oberfläche (31) kombiniert ist,

wobei ein optischer Splitter auf einer Seite der ersten Linse (20) nahe der Anzeigeeinheit (10) angeordnet ist, **dadurch gekennzeichnet, dass**:

jede der ersten Fläche (21), der zweiten Fläche (22) und der dritten Fläche (31) eine asphärische Fläche ist, ein Randabschnitt der ersten Linse (20) und ein Randabschnitt der zweiten Linse (30) aneinander geklebt und miteinander verbunden sind, und

zwischen der ersten Linse (20) und der zweiten Linse (30) ein Spalt vorhanden ist.

2. Optisches System nach Anspruch 1, wobei das optische System die folgenden Beziehungen erfüllt:

$$150 < abs(R3) < 400;$$

und

$$abs(Conic3) < 5,$$

wobei R3 der Krümmungsradius der dritten Fläche (31) ist, abs(R3) ein absoluter Wert von R3 ist; und wobei Conic3 ein konischer Koeffizient der dritten Fläche (31) ist und abs(Conic3) ein absoluter Wert von Conic3 ist.

3. Optisches System nach Anspruch 1, wobei das optische System die folgenden Beziehungen erfüllt:

$$300 < abs(R2) < 550;$$

und

$$abs(Conic2) < 5,$$

wobei R2 der Krümmungsradius der zweiten Oberfläche (22) ist, abs(R2) ein absoluter Wert von R2 ist, und wobei Conic2 ein konischer Koeffizient der zweiten Oberfläche (22) ist und abs(Conic2) ein absoluter Wert von Conic2 ist.

4. Optisches System nach Anspruch 1, wobei das optische System die folgenden Beziehungen erfüllt:

$$40 \ < \ abs(R1) \ < \ 70;$$

und

$$abs(Conic1) \ < \ 5,$$

wobei R1 ein Krümmungsradius der ersten Oberfläche (21) ist, abs(R1) ein absoluter Wert von R1 ist, und wobei Conic1 ein konischer Koeffizient der ersten Oberfläche (21) ist und abs(Conic1) ein absoluter Wert von Conic1 ist.

5. Optisches System nach Anspruch 1, wobei das optische System die folgenden Beziehungen erfüllt:

$$4 \ < \ T1 \leq 5; \ und \ 3 \ < \ T2 \ < \ 4,$$

wobei T1 eine zentrale Dicke der ersten Linse (20) ist, T2 eine zentrale Dicke der zweiten Linse (30) ist.

6. Optisches System nach Anspruch 1, wobei das optische System die folgenden Beziehungen erfüllt:

$$5 \ < \ L1 \ < \ 10;$$

$$0,1 \ < \ L2 \ < \ 0,5;$$

und

$$0,02 \ < \ ED \ < \ 0,1,$$

wobei L1 ein Abstand von der Anzeigeeinheit (10) zu der ersten Oberfläche (21) in einer optischen Achsenrichtung ist, L2 ein Abstand zwischen der zweiten Oberfläche (22) und der dritten Oberfläche (31) in der optischen Achsenrichtung ist und ED ein Abstand zwischen einem Randabschnitt der ersten Linse (20) entfernt von der optischen Achse und einem Randabschnitt der zweiten Linse (30) entfernt von der optischen Achse ist.

7. Optisches System nach Anspruch 1, wobei das optische System die folgenden Beziehungen erfüllt:

$$15*f \ < \ abs(f2) \ < \ 20f; \ und \ 4*f \ < \ f1 \ < \ 6*f,$$

wobei f eine Brennweite des optischen Systems ist, f1 eine Brennweite der ersten Linse (20) ist, f2 eine Brennweite der zweiten Linse (30) ist, und abs(f2) ein absoluter Wert von f2 ist.

8. Optisches System nach einem der Ansprüche 1 bis 7, wobei die zweite Oberfläche (22) mit einer Antireflexionsfilmschicht versehen ist und eine Wellenlänge des von der Anzeigeeinheit (10) emittierten Lichts in einem Bereich eines Antireflexionsbandes der Antireflexionsfilmschicht enthalten ist.

9. Vorrichtung für virtuelle Realität, wobei die Vorrichtung für virtuelle Realität das optische System nach einem der Ansprüche 1 bis 8 umfasst.

10. Verfahren zum Zusammenbau eines optischen Systems nach Anspruch 1, wobei das optische System ferner ein Strukturelement umfasst, wobei das Verfahren umfasst:

Einstellen der ersten Linse (20) in eine erste voreingestellte Montageposition und Einstellen der zweiten Linse (30) in eine zweite voreingestellte Montageposition, so dass eine optische Achse der ersten Linse (20) kollinear mit einer optischen Achse der zweiten Linse (30) ist;

Aufbringen eines Klebstoffs auf einen Randbereich der ersten Linse (20);

Einstellen eines Abstands zwischen der ersten Linse (20) und der zweiten Linse (30), um den Randabschnitt der ersten Linse (20) so zu steuern, dass er mit einem Randabschnitt der zweiten Linse (30) ausgerichtet ist; und

Aufkleben der ersten Linse (20) und der zweiten Linse (30), um eine Linsenkombination zu erhalten;

Montage der Linsenkombination auf dem Bauteil.

11. Verfahren zum Zusammenbau eines optischen Systems nach Anspruch 10, wobei der Schritt des Auftragens des Klebstoffs auf einen Randbereich der ersten Linse (20) umfasst:

Bestimmen eines voreingestellten Bereichs der ersten Linse (20), wobei sich der voreingestellte Bereich in Umfangsrichtung auf dem Randabschnitt der ersten Linse (20) befindet; und

Auftragen des Klebstoffs auf die voreingestellte Fläche.

12. Verfahren zum Zusammenbau eines optischen Systems nach Anspruch 10, wobei das Verfahren ferner umfasst, dass nach dem Schritt des Einstellens eines Abstands zwischen der ersten Linse (20) und der zweiten Linse (30) der Randabschnitt der ersten Linse (20) so gesteuert wird, dass er mit dem Randabschnitt der zweiten Linse (30) ausgerichtet ist:

Aushärten des auf dem Randbereich der ersten Linse (20) aufgebrachten Klebstoffs.

## Revendications

1. Système optique comprenant:

une unité d'affichage (10), une première lentille (20) et une seconde lentille (30) en séquence le long d'une direction de transmission de la lumière,

dans lequel la première lentille (20) comprend une première surface (21) faisant saillie vers l'unité d'affichage (10) et une seconde surface (22) faisant saillie vers la seconde lentille (30),

dans lequel la deuxième lentille (30) comprend une troisième surface (31) en retrait par rapport à la première lentille (20) et une quatrième surface (32) éloignée de la première lentille (20),

dans lequel le système optique comprend en outre un premier retardateur de phase et un polariseur réfléchissant, le premier retardateur de phase étant disposé sur un côté de la deuxième lentille (30) éloigné de l'unité d'affichage (10), ou sur un côté de la deuxième lentille (30) proche de l'unité d'affichage (10), et le polariseur réfléchissant étant disposé sur un côté du premier retardateur de phase éloigné de l'unité d'affichage (10),

dans lequel le rayon de courbure de la deuxième surface (22) est supérieur au rayon de courbure de la troisième surface (31), et une partie du bord de la deuxième surface (22) est combinée avec une partie du bord de la troisième surface (31),

dans lequel un séparateur optique est disposé sur un côté de la première lentille (20) proche de l'unité d'affichage (10),

**caractérisé en ce que**:

la première surface (21), la deuxième surface (22) et la troisième surface (31) sont des surfaces asphériques,

une partie du bord de la première lentille (20) et une partie du bord de la seconde lentille (30) sont collées et combinées l'une à l'autre, et

il y a un espace entre la première lentille (20) et la deuxième lentille (30).

2. Système optique de la revendication 1, dans lequel le système optique satisfait aux relations suivantes:

$$150 < abs(R3) < 400;$$

et

$$abs(Conic3) < 5,$$

dans lequel R3 est le rayon de courbure de la troisième surface (31), abs(R3) est une valeur absolue de R3; et dans lequel Conic3 est un coefficient conique de la troisième surface (31), et abs(Conic3) est une valeur absolue de Conic3.

3. Système optique de la revendication 1, dans lequel le système optique satisfait aux relations suivantes:

$$300 < abs(R2) < 550;$$

et

$$abs(Conic2) < 5,$$

dans lequel R2 est le rayon de courbure de la seconde surface (22), abs(R2) est une valeur absolue de R2, et dans lequel Conic2 est un coefficient conique de la seconde surface (22), et abs(Conic2) est une valeur absolue de Conic2.

4. Système optique de la revendication 1, dans lequel le système optique satisfait aux relations suivantes:

$$40 < abs(R1) < 70;$$

et

$$abs(Conic1) < 5,$$

dans lequel R1 est un rayon de courbure de la première surface (21), abs(R1) est une valeur absolue de R1, et dans lequel Conic1 est un coefficient conique de la première surface (21), et abs(Conic1) est une valeur absolue de Conic1.

5. Système optique de la revendication 1, dans lequel le système optique satisfait aux relations suivantes:

$$4 < T1 \leq 5; \ et \ 3 < T2 < 4,$$

dans lequel T1 est une épaisseur centrale de la première lentille (20), T2 est une épaisseur centrale de la seconde lentille (30).

6. Système optique de la revendication 1, dans lequel le système optique satisfait aux relations suivantes:

$$5 < L1 < 10;$$

$$0,1 < L2 < 0,5;$$

et

$$0,02 < ED < 0,1,$$

dans lequel L1 est une distance entre l'unité d'affichage (10) et la première surface (21) dans la direction de l'axe optique, L2 est une distance entre la deuxième surface (22) et la troisième surface (31) dans la direction de l'axe optique, et ED est une distance entre une partie du bord de la première lentille (20) éloignée de l'axe optique et une partie du bord de la deuxième lentille (30) éloignée de l'axe optique.

7. Système optique de la revendication 1, dans lequel le système optique satisfait aux relations suivantes:

$$15*f < abs(f2) < 20f; \ et \ 4*f < f1 < 6*f,$$

dans lequel f est une distance focale du système optique, f1 est une distance focale de la première lentille (20), f2 est une distance focale de la seconde lentille (30), et abs(f2) est une valeur absolue de f2.

8. Système optique de l'une des revendications 1 à 7, dans lequel la deuxième surface (22) est pourvue d'une couche de film antireflet, et une longueur d'onde de la lumière émise par l'unité d'affichage (10) est comprise dans une plage d'une bande antireflet de la couche de film antireflet.

9. Dispositif de réalité virtuelle, dans lequel le dispositif de réalité virtuelle comprend le système optique de l'une des revendications 1 à 8.

10. Méthode d'assemblage d'un système optique selon la revendication 1, dans laquelle le système optique comprend en outre un élément structurel, la méthode comprenant:

le réglage de la première lentille (20) dans une première position de montage prédéfinie et réglage de la seconde lentille (30) dans une seconde position de montage prédéfinie, de sorte qu'un axe optique de la première lentille (20) soit colinéaire à un axe optique de la seconde lentille (30);
l'application d'un adhésif sur une partie du bord de la première lentille (20);
l'ajustement d'une distance entre la première lentille (20) et la seconde lentille (30) pour contrôler la partie du bord de la première lentille (20) afin qu'elle soit alignée avec une partie du bord de la seconde lentille (30); et
le collage de la première lentille (20) et la seconde lentille (30) pour obtenir une combinaison de lentilles;
le montage de la combinaison de lentilles sur l'élément structurel.

11. Méthode d'assemblage d'un système optique de la revendication 10, dans laquelle l'étape d'application de l'adhésif sur une partie du bord de la première lentille (20) comprend:

la détermination d'une zone prédéfinie de la première lentille (20), dans laquelle la zone prédéfinie est située de manière circonférentielle sur la partie du bord de la première lentille (20); et
l'application de l'adhésif sur la zone prédéfinie.

12. Méthode d'assemblage d'un système optique de la revendication 10, dans laquelle la méthode comprend en outre, après l'étape d'ajustement d'une distance entre la première lentille (20) et la deuxième lentille (30) pour contrôler la partie du bord de la première lentille (20) à aligner avec la partie du bord de la deuxième lentille (30):
le durcissement de l'adhésif appliqué sur la partie du bord de la première lentille (20).

**Fig. 1**

**Fig. 2**

object surface：0.00deg

400.00

image surface:0.00mm

object surface：20.00deg  $\boxtimes = 0.54$

image surface:6.323mm

object surface：40.00deg

image height:12.100mm

**Fig. 3**

field curvature

+Y

40.0
30.0
20.0
10.0
0

-2.0    0    2.0

millimeter

distortion

40.0
30.0
20.0
10.0
0

-50.0    0    50.0

percentage

— 0.4500 tangential ··· 0.4500 meridional
··· 0.5400 tangential ··· 0.5400 meridional
— 0.6300 tangential ···· 0.6300 meridional

— 0.4500    ··· 0.5400    — 0.6300

**Fig. 4**

maximum half field-of-view : 40.00deg

**Fig. 5**

| Adjusting the first lens to a first preset mounting position and adjusting the second lens to a second preset mounting position, so that the optical axis of the first lens is collinear with the optical axis of the second lens. | S100 |

| Applying an adhesive to an edge portion of the first lens. | S200 |

| Adjusting a distance between the first lens and the second lens to control the edge portion of the first lens to be aligned with an edge portion of the second lens. | S300 |

| Adhering the edge portions of the first lens and the second lens to obtain a lens combination, and mounting the lens combination on the structural member. | S400 |

**Fig. 6**

Adjusting the first lens to a first preset mounting position and adjusting the second lens to a second preset mounting position, so that the optical axis of the first lens is collinear with the optical axis of the second lens. ⟳ S100

Determining a preset area of the first lens, wherein the preset area is circumferentially located on the edge portion of the first lens. ⟳ S210

Applying an adhesive to the preset area. ⟳ S220

Adjusting a distance between the first lens and the second lens to control the edge portion of the first lens to be aligned with an edge portion of the second lens. ⟳ S300

Adhering the edge portions of the first lens and the second lens to obtain a lens combination, and mounting the lens combination on the structural member. ⟳ S400

**Fig. 7**

Adjusting the first lens to a first preset mounting position and adjusting the second lens to a second preset mounting position, so that the optical axis of the first lens is collinear with the optical axis of the second lens.　　S100

Applying an adhesive to an edge portion of the first lens.　　S200

Adjusting a distance between the first lens and the second lens to control the edge portion of the first lens to be aligned with an edge portion of the second lens.　　S300

Curing the adhesive applied on the edge portion of the first lens.　　S500

Adhering the edge portions of the first lens and the second lens to obtain a lens combination, and mounting the lens combination on the structural member.　　S400

**Fig. 8**

**EP 4 130 849 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019384045 A1
- CN 110764266 A
- US 20180164590 A1
- CN 205562977 U
- US 5644436 A1